# EUROPEAN PATENT SPECIFICATION

(11) **EP 1 467 858 B1**
(45) Date of publication and mention of the grant of the patent: **25.08.2010**
(21) Application number: 03700860.4
(22) Date of filing: 13.01.2003
(51) Int. Cl.: B32B 5/14, E04C 2/296

(54) **AIR PERMEABLE CLADDING PANEL**
LUFTDURCHLÄSSIGES FASSADENELEMENT
BARDAGE

(30) Priority: 11.01.2002 GB 0200610
(43) Date of publication of application: 20.10.2004
(73) Proprietor: Enviromental Building Partnership Limited, Aberdeen Aberdeenshire AB10 1FW (GB)
(72) Inventor: IMBABI, Mohammed Aberdeen Univ. Auris Busin. Ctr., Aberdeen AB24 3RY (GB)
(74) Representative: Ablett, Graham Keith
(86) International application number: PCT/GB2003/000089
(87) International publication number: WO 2003/057470

(56) References cited:
- DE-A- 19 618 758
- DE-U- 9 214 014
- US-B1- 6 315 805
- TAYLOR, WEBSTER, IMBABI: "The building envelope as an air filter" BUILDING AND ENVIRONMENT, vol. 34, no. 3, 1999, pages 353-361, XP002238240
- TAYLOR, IMBABI: "The application of dynamic insulation in buildings" RENEWABLE ENERGY, vol. 15, 1998, pages 377-382, XP004138030
- TAYLOR, IMBABI, CAWTHORNE: "Analytical Investigation of the Steady-State Behaviour of dynamic and Diffusive Building Envelopes" BUILDING AND ENVIRONMENT, vol. 31, no. 6, 1996, pages 519-525, XP002238241
- "Technique is a breath of fresh air" DESIGN ADVICE, [Online] no. 1, 2002, XP002238242 Retrieved from the Internet: <URL:http://cig.bre.co.uk/DesignAdvice/dow nloads/dan4.pdf> [retrieved on 2003-04-14]

## Description

The present invention relates to cladding and in particular, but not exclusively, to such cladding when applied to buildings located in relatively polluted areas.

In this regard, airborne particulate and gaseous pollution is known to have a hugely detrimental effect on human health. In conventional buildings, much emphasis is placed on achieving airtightness and low infiltration losses, with controlled fresh air intake ducted into the building using a mechanical *Heating, Ventilation and Air Conditioning* (HVAC) system. Floor and wall apertures are traditionally specified in Codes of Practice to provide trickle ventilation, with opening size specified on the basis of floor area. Thermal insulation in such buildings passively curtails conduction heat loss, to achieve energy efficiency. This outlines the tried-and-tested approach, and though it continues to be technically valid, its drawbacks are high capital and maintenance costs and tight minimum ventilation quotas to limit heating energy demand. In some cases, illnesses known as 'Sick Building Syndrome' have been attributed to inherent design shortcomings, poor implementation or lax maintenance of the HVAC installation itself.

The current UK Government has declared its commitment to reduce the concentration of airborne particulate matter (Review of Air Quality Strategy, 2001). Significant research has been carried out in recent years to understand the effect of particulate matter on human health (Seaton *et al,* 1995; COMEAP, 1998). Nonetheless, uncertainty still exists. The potential effects are substantial enough, however, for the UK Government to recommend that the precautionary approach be applied to the issue of particulate emissions. This asserts that the potential risk should be reduced to as low as is reasonably practicable even though there is much that is still not understood.

Efforts to derive a strategy to minimise particulate emissions have been problematical. Much of the problem is due to the source and location of source of particulate matter.

In this regard, the source of particulate air pollution in cities is principally derived from:
1. Primary particles - from the products of incomplete combustion (mainly road traffic, electricity production, building space heating)
2. Secondary particles - formed in the atmosphere from the chemical reaction of sulphurous and nitrous emissions.
3. Biological particles - re-suspended road dust, construction, quarrying, sea salt, agricultural.

Each source is responsible for roughly a third of the total of urban background concentration. In the UK, typically 80% of emissions originate from UK sources but this percentage can fall if certain wind conditions exist. Anticyclone wind conditions can cause this figure to fall to 50% (or lower in the SE of England). Current strategies to limit particulate emissions concentrate on *front of pipe solutions,* mitigating or eliminating emissions from diesel engines and power plants for instance.

However, due to the diverse nature and location of the sources of particulate matter, the original limits set in initial World Health Organisation guidelines in 1997 were rejected as unattainable. These initial World Health Organisation guidelines could not have been met, for instance, even if the utopian situation of no road traffic were to be achieved. The limits were thus increased.

It is clear, therefore, that an alternative strategy is required to deal with removal of particulate matter from the atmosphere.

In this respect some work has been undertaken by the inventors of the present application in providing a "breathable" wall cladding for buildings, as discussed in the papers: Taylor, Webster, Imbabi: "The building envelope as an air filter" Building and Environment, vol.34, no.3, 1995, pages 353-361 XP002238240 and Taylor, Imbabi: "The application of dynamic insulation in buildings" Renewable Energy, vol.15, 1998, pages 377-382, XPOO4138030.

Such a building is provided with panels which are permeable to air and which include a single insulating layer. Air flows through the panels, driven by a negative differential in pressure between the interior and exterior of the building. Air that flows into the building picks up heat that is being conducted outwards, thus further improving the building's space heating performance. The insulation media provides filtration characteristics such that particulates can be trapped by the insulation as they pass through the cladding. However, the inventors have identified problems in relation to clogging of the insulation which reduce the effectiveness of the "breathable" wall cladding concept.

An object of the present invention is to alleviate the problems identified above.

According to a first aspect of the present invention there is provided cladding material comprising:- an outer air permeable rover; an inner air permeable cover; and an intermediate layer having a graduated filtering profile, the cladding material further comprising filter materials for particulate emissions and one or more of:- gas pollutants, chemical agents and biological agents.

With respect to the intermediate layer, the development of a graduated filtering profile has been found to enable selective particle filtration, to enhance filtration through depth within the intermediate layer and hence delay clogging. This thereby avoids the existence of predominantly surface filtration and rapid filter-cake deposition that can lead to premature clogging.

Preferably, the filtering characteristics of the intermediate layer are such as to trap relatively large particles( > 10 µm) towards the outer cover end of the intermediate layer and to trap relatively smaller particles 0.01 µm) towards the inner cover end of the intermediate layer. With constant filter loading, (i.e. static particulate pollution levels) and a uniform rate of particle deposition through depth, the life of the intermediate layer would then be a function of the layer's thickness. All things being equal, as layer thickness is increased then so does the volume (per unit area of cladding) available for particle capture and sequestration increase.

Of comparable significance, the graduated filtering profile also permits incorporating materials that have been optimised for the filtration of gaseous pollutants and biological agents (or contaminants). Adsorption of gases generally requires large surface area of the media and long residence time of the incoming gas in contact with this media to work effectively Both conditions are satisfied with dynamic insulation used over a large wall area. For example, any natural fibre presented in the correct packing density and thickness could be used to filter a reactive species such as ozone, as well as capturing ultra-fine particulates.

Alternative solutions to clogging, such as incorporating "multi-stage" disposable filter layers in the design, are also possible. A clogged layer could simply be "peeled-off", and safely disposed of to expose a fresh filter surface every few years. It is thus realistic to target a life in excess of 20 years before entire wall panels have to be replaced, or possibly regenerated, irrespective of the clogging risk outlined, It is worth noting at this point that the problem of premature clogging becomes less significant the more buildings per city block are dynamically insulated, an important factor to consider when specifying this construction form in a heavily polluted urban setting.

In preferred embodiments, the cladding material has other features including thermal and/or sound insulating properties for energy efficiency and indoor ambiance.

Conveniently, the intermediate layer comprises one or more of:- mineral wool, wet-blown cellulose, glass wool or any other suitable fibre material.

Preferably, the intermediate layer is provided in the form of one or more of:- membranes, fibres, pulp or cellular based (foam or sponge) materials, modified aerated concrete, or other such materials which are cost effective and readily available. The intermediate layer may comprise additional components to provide structural support, to facilitate uniform airflow through the insulation media, to provide air distribution, pre-filtration, heating, cooling and/or dehumidification and may provide sealing components to stop undesirable air leakage at borders and edges.

The cladding material may be provided in the form of a Structural Insulation Panel (SIP) and comprises materials possessing filtration properties specific for particulate matter and one or more of:- gas pollutants, chemical agents and biological agents.

In preferred embodiments, the cladding material is provided in the form of panel units. Conveniently, the panel units are provided in modular format. Implemented in a modular format, walls can be fabricated from such panel units comprising layers of different materials with complementary particulate filtration characteristics, one or more of which could additionally enable filtration of one or more of gaseous pollutants, chemical and/or biological agents, etc. The adoption of a modular approach is important, since the panels can ultimately be produced in a variety of shapes, sizes and finishes to meet the demands of a diverse construction market, optimised for either new-build or retrofitting, and mass produced to keep costs low and availability high.

Preferably, the intermediate layer may be formed of a plurality of separate air permeable filter layers, of different, yet complimentary filtering characteristics. The intermediate layer may alternatively be formed of a single filter layer, whose filtering characteristics vary across its thickness. The or each filter layer of the intermediate layed may be independently replaceable, whereby a clogged filter layer can be removed and replaced or reconditioned when required.

In preferred embodiments, the or each filter layer of the intermediate layer may comprise one or more disposable filter elements. If clogged, such filter elements can be removed, for example as discussed above, by "peeling off" and safely disposed of to expose a fresh filter surface. The lifespan of the panel can be prolonged in this manner.

In preferred embodiments where a plurality of filter layers is present, each filter layer of the intermediate layer is selected to extract a specified range of particle sizes, gaseous pollutants, and/or biological agents. Conveniently, the separate filter layers of the intermediate layer together define substantially the complete filtration spectrum of particulate and other pollution.

In preferred embodiments, the cladding material is for a building or other construction. Other embodiments without limitation include air, land and sea vehicles, tunnels, roads, car parks, and various other constructions.

The cladding material may be combined with other components, such as glazing, renewable energy devices, or smart elements as part of a composite modular panel unit.

The present invention hence provides for a pollution removing dynamically insulated, air permeable cladding material that also can enhance energy efficiency for internal heating and/or cooling. When applied to a building or other construction, fresh ventilation air can be pre-heated (or cooled) and filtered as it is drawn into the building or other construction through a durable, purpose-designed porous building envelope. A new type of 'breathing wall' cladding panel is hereby provided enabling urban environments to be developed that are less polluted and healthier to live in, and contributing positively to sustainable future development.

Dynamic insulation permits the movement of air through an air permeable, dynamically insulated wall. This reduces conduction heat loss (or gain in cooling applications) and provides a method of bringing filtered fresh air into the building. The materials needed to achieve this (i.e., possessing appropriate insulation and permeability characteristics) are available, and include conventional insulation materials such as mineral wool, wet-blown cellulose and glass wool. A well designed dynamically insulated building or other construction can dispense with large heating and ventilation plant and ancillaries (ducting, etc.), allow higher controlled ventilation rates to be achieved, and reduce fossil fuel consumption by cutting out conduction heat fluxes. They effectively enable any desired building fabric heat loss coefficient, or U-value, to be achieved using thinner than conventional walls in a range of building and other construction types, including multi-storey buildings, easily surpassing current UK and European Building Standards and Regulations.

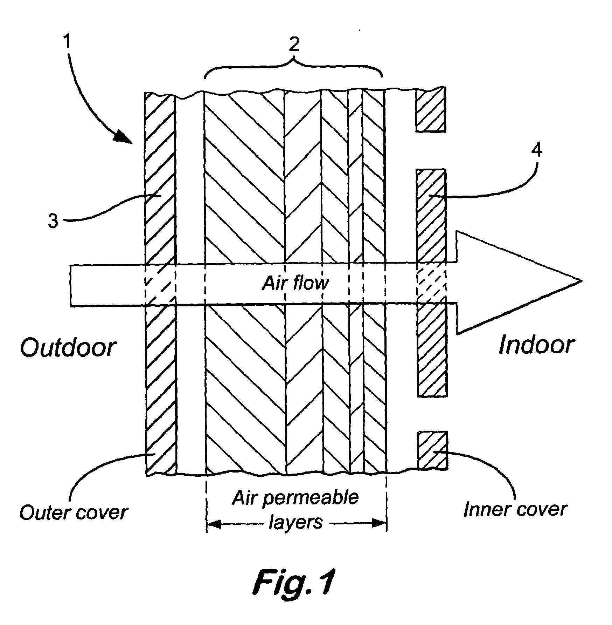

An embodiment of the present invention will now be described by way of example with reference to the drawing in which:-
Figure 1 shows schematically a cross-section taken through a section of cladding according to the invention.

As shown in the example of Figure 1, the invention concerns a multi-layer cladding panel 1 of modular construction, comprising a series arrangement of one or more air permeable intermediate or internal layers 2 of varying properties and thickness contained within an optional vented outdoor-facing weatherproof cover 3 and an optional indoor-facing wearing surface cover 4.

The panel may contiguously incorporate the above components.

Alternatively, the internal layers may be bonded directly to discrete outer and inner covers, or separated by one or more air plenums, with additional (not shown) structural support, air distribution, pre-filtration, heating, cooling and/or dehumidification and sealing components, depending on design/fabrication requirements. In operation, fresh ventilation air is drawn into the building or other construction through such cladding panels forming all or part of the envelope (skin) of the building or other construction, and stale air is exhausted from the building or other construction, through an outlet duct to atmosphere (not shown). Used over a sufficiently large area of the building envelope, the panels will provide heat and sound insulation characteristics that surpass existing regulations and standards. More importantly, as air is slowly drawn into the building or other construction through the panels, the different internal layers will each extract a fraction of the overall particulate content and other forms of pollution from the air flow in a manner commensurate with their individual filtration characteristics. Such characteristics may include porosity, permeability, packing density, fibre size (in the case of fibrous insulation), as well as chemical properties, biological properties, etc.

This gradation of complementary filtration properties of the intermediate or internal layer 2 may be provided by using separate filtration layers as shown, or by use of a single contiguous layer of air permeable insulation. The cumulative effect of this combination of insulation layers or gradation of properties is permanent removal and safe sequestration of substantially all pollution from the air being used to ventilate the building or other construction, and in time cleaning of the outdoor environment itself.

The multi-layer construction or graduated single layer construction and the selection of the filter characteristics of the layers facilitates filtration through the depth of the cladding panel, which correctly implemented prevents pre-mature clogging of the panel and ensures an acceptable service life before replacement or refurbishment is required. This provides a unique and innovative solution to the air pollution problem, including the unchecked hazards of particulates. Buildings or other constructions using such cladding panels, in the manner described, will act to preserve the health and well-being of both building occupant and the surrounding outdoor environment as part of their normal operation, unlike the conventional buildings of today which do neither.

To function correctly in a specific building or other construction, the cladding material requires appropriate filtration and pressure drop properties across its component layers, good thermal and sound insulation, and resistance to environmentally induced degradation to be established.

The intermediate layers 2 may be formed of membranes, fibres, pulp, or cellular-based (foam or sponge) materials, or modified aerated concrete. The range of applications across the filtration spectrum spans the ionic (atomic radius) to the macro-particle (fine sand) ranges. Fibres present an attractive choice for use in dynamically insulated buildings due to their efficacy in the PM_{2.5} - PM₁₀ range at the flow velocities of interest, wide availability, utility, low cost, and prevalence as conventional building insulation materials.

The cladding may further comprise materials for gaseous adsorption or room-temperature catalytic conversion of for example COx, NOx, Sox and ozone. Chemical and biological agent filters can also be included as part of an enhanced cladding panel design.

The or each filtration layer of the intermediate or internal layer 2 may comprise one or more disposable filter elements. If clogged, such filter elements can be removed, for example by "peeling off", and safely disposed of to expose a fresh filter surface. The lifespan of the panel can be prolonged in this manner.

Where a plurality of filter layers are present, each filter layer of the intermediate layer can be selected to extract a specified range of particle sizes.

The present invention is not to be limited in scope by the specific embodiment described herein. Indeed, various modifications of the invention will become apparent to those skilled in the art from the foregoing description and accompanying figure. Such modifications are intended to fall within the scope of the appended claims.

## Claims

1. A cladding material comprising:- an outer air permeable cover (3); an inner air permeable cover (4); and an intermediate layer (2) having a graduated filtering profile, the cladding material further comprising filter materials for particulate emissions and one or more of:- gas pollutants, chemical agents and biological agents.

2. A material according to claim 1, wherein the filtering characteristics of the intermediate layer (2) are such as to trap relatively large particles towards the outer cover end of the intermediate layer and to trap relatively smaller particles towards the inner cover end of the intermediate layer.

3. A cladding material according to claim 1 or 2, wherein the intermediate layer (2) has thermal and/or sound insulating properties.

4. A cladding material according to any preceding claim, wherein the intermediate layer (2) comprises one or more of:- mineral wool, wet-blown cellulose and glass wool.

5. A cladding material according to any preceding claim, wherein the intermediate layer (2) is provided in the form of one or more of:- membranes, fibres, pulp or cellular based (foam or sponge) materials, or modified aerated concrete.

6. A cladding material according to claim 5, wherein the intermediate layer (2) comprises fibres.

7. A cladding material according to any preceding claim, wherein the intermediate layer (2) has a plurality of filter layers having different filtering characteristics.

8. A cladding material according to claim 7, wherein each filter layer of the intermediate layer (2) is selected to extract a specified range of particle sizes, gaseous pollutants, chemical pollutants, and/or biological agents.

9. A cladding material according to claim 8, wherein separate filter layers of the intermediate layer(2) together define substantially the complete filter spectrum of particulate and other pollution.

10. A cladding material according to any one of claims 1 to 6, wherein the intermediate layer (2) is formed of a single filter layer, whose filtering characteristics vary across its thickness.

11. A cladding material according to any preceding claim, wherein the or each filter layer of the intermediate layer (2) comprises one or more disposable filter elements.

12. A cladding material according to any preceding claim, provided in the form of a modular panel unit.

13. A cladding material according to claim 12, wherein the or each panel unit is configured to filter out harmful chemical and/or biological agents.

14. A building or other construction comprising a plurality of panel units according to claim 12 or 13.

## Patentansprüche

1. Ein Verkleidungsmaterial das Folgendes umfasst:- eine äußere luftdurchlässige Abdeckung (3); eine innere luftdurchlässige Abdeckung (4); eine Zwischenschicht (2) mit einem abgestuften Filterprofil, wobei das Verkleidungsmaterial überdies Filtermaterialien für Feinstaubemissionen sowie für einen oder mehrere der Folgenden umfasst:- Schadgase, chemische Stoffe und biologische Stoffe.

2. Ein Verkleidungsmaterial gemäß Anspruch 1, worin die Filtereigenschaften der Zwischenschicht (2) derart beschaffen sind, dass sie relativ große Partikel in Richtung äußere Stirnseite der Zwischenschichtabdeckung und vergleichsweise kleinere Partikel in Richtung innere Stirnseite der Zwischenschichtabdeckung abfangen.

3. Ein Verkleidungsmaterial gemäß Anspruch 1 oder 2, worin die Zwischenschicht (2) thermische und/oder schalldämpfende Eigenschaften aufweist.

4. Ein Verkleidungsmaterial gemäß einem der vorhergehenden Ansprüche, worin die Zwischenschicht (2) eines oder mehrere der folgenden Materialien umfasst:-Mineralwolle, nass geblasene Zellulose und Glaswolle.

5. Ein Verkleidungsmaterial gemäß einem der vorhergehenden Ansprüche, worin die Zwischenschicht (2) in einer oder mehreren der folgenden Formen vorhanden ist:- Membrane, Fasern, Zellstoff oder zelluläre (Schaum oder Schwamm) Materialien oder modifizierter Leichtbeton.

6. Ein Verkleidungsmaterial gemäß Anspruch 5, worin die luftdurchlässige Platte (2) Fasern enthält.

7. Ein Verkleidungsmaterial gemäß einem der vorhergehenden Ansprüche, worin die Zwischenschicht (2) eine Vielzahl von Filterschichten mit unterschiedlichen Filtereigenschaften aufweist.

8. Ein Verkleidungsmaterial gemäß Anspruch 7, worin jede Filterschicht der Zwischenschicht (2) entsprechend ausgewählt wird, um eine bestimmte Bandbreite von Partikelgrößen, Schadgasen, chemischen Schadstoffen und/oder biologischen Stoffen zu entfernen.

9. Ein Verkleidungsmaterial gemäß Anspruch 8, worin getrennte Filterschichten der Zwischenschicht (2) gemeinsam weitgehend das komplette Filterspektrum für Feinstaub und sonstige Verschmutzung abdecken.

10. Ein Verkleidungsmaterial gemäß einem der Ansprüche 1 bis 6, worin die Zwischenschicht (2) aus einer einzelnen Filterschicht gebildet wird, deren Filtereigenschaften über ihre gesamte Dicke hinweg variieren.

11. Ein Verkleidungsmaterial gemäß einem der vorhergehenden Ansprüche, worin die oder jede Filterschicht der Zwischenschicht (2) ein oder mehrere Einwegfilterelemente enthält.

12. Ein Verkleidungsmaterial gemäß einem der vorhergehenden Ansprüche, das in der Form einer modularen Platteneinheit zur Verfügung gestellt wird.

13. Ein Verkleidungsmaterial gemäß Anspruch 12, worin die oder jede Platteneinheit entsprechend beschaffen ist, damit sie schädliche chemische und/oder biologische Stoffe herausfiltert.

14. Ein Gebäude oder eine andere Konstruktion, die eine Vielzahl von Platteneinheiten gemäß Anspruch 12 oder 13 beinhaltet.

## Revendications

1. Matériau de revêtement comprenant : - une paroi extérieure perméable à l'air (3) ; une paroi intérieure perméable à l'air (4) ; et une couche intermédiaire (2) présentant un profil de filtrage gradué, le matériau de revêtement comprenant en outre des matériaux de filtrage pour les émissions de matières particulaires et un ou plus de : polluants gazeux, agents chimiques et agents biologiques.

2. Matériau selon la revendication 1, dans lequel les caractéristiques de filtrage de la couche intermédiaire (2) sont telles qu'elles piègent les matières particulaires relativement grandes se dirigeant en direction de l'extrémité de la paroi extérieure de la couche intermédiaire et qu'elles piègent les matières particulaires relativement plus petites se dirigeant en direction de l'extrémité de la paroi intérieure de la couche intermédiaire.

3. Matériau de revêtement selon la revendication 1 ou 2, dans lequel la couche intermédiaire (2) présente des propriétés thermiques etlou d'isolation acoustique.

4. Matériau de revêtement selon l'une quelconque des revendications précédentes, dans lequel la couche intermédiaire (2) comprend une ou plus de :- laine minérale, cellulose soufflée par voie humide et laine de verre.

5. Matériau de revêtement selon l'une quelconque des revendications précédentes, dans lequel la couche intermédiaire (2) est prévue sous la forme de l'une ou plus de : - membranes, fibres, pulpe à papier ou matériaux à base cellulaire (mousse ou éponge) ou béton aéré modifié.

6. Matériau de revêtement selon la revendication 5, dans lequel la couche intermédiaire (2) comprend des fibres.

7. Matériau de revêtement selon l'une quelconque des revendications précédentes, dans lequel la couche intermédiaire (2) présente une pluralité de couches fibreuses possédant différentes caractéristiques de filtrage.

8. Matériau de revêtement selon la revendication 7, dans lequel chaque couche fibreuse de la couche intermédiaire (2) est choisie de manière à extraire une plage spécifiée de tailles de matières particulaires, de polluants gazeux, de polluants chimiques et/ou d'agents biologiques.

9. Matériau de revêtement selon la revendication 8, dans lequel des couches de filtrage séparées de la couche intermédiaire (2) définissent ensemble sensiblement le spectre de filtrage complet des matières particulaires et autre pollution.

10. Matériau de revêtement selon l'une des revendications 1 à 6, dans lequel la couche intermédiaire (2) est formée d'une couche de filtrage unique, dont les caractéristiques de filtrage varient sur toute son épaisseur.

11. Matériau de revêtement selon l'une quelconque des revendications précédentes, dans lequel la ou chaque couche de filtrage de la couche intermédiaire (2) comporte un élément de filtrage jetable ou plus.

12. Matériau de revêtement selon une quelconque des revendications précédentes, prévu sous la forme d'une unité de panneaux modulaires.

13. Matériau de revêtement selon la revendication 12, dans lequel le ou chaque unité de panneaux est configurée pour filtrer les agents chimiques et/ou biologiques nocifs.

14. Bâtiment ou autre construction comprenant une pluralité d'unités de panneaux selon la revendication 12 ou 13.
